## Europäisches Patentamt
## European Patent Office
## Office européen des brevets

(11) Veröffentlichungsnummer: **0 423 338 A1**

(12)

# EUROPÄISCHE PATENTANMELDUNG
## veröffentlicht nach Art. 158 Abs. 3
## EPÜ

(21) Anmeldenummer: **89909898.2**

(51) Int. Cl.5: **B22F 7/04**

(22) Anmeldetag: **21.03.89**

(86) Internationale Anmeldenummer:
**PCT/SU89/00073**

(87) Internationale Veröffentlichungsnummer:
**WO 90/11154 (04.10.90 90/23)**

(43) Veröffentlichungstag der Anmeldung:
**24.04.91 Patentblatt 91/17**

(84) Benannte Vertragsstaaten:
**AT CH DE FR GB IT LI NL SE**

(71) Anmelder: **INSTITUT STRUKTURNOI MAKROKINETIKI AKADEMII NAUK SSSR Moskovskaya oblast Poselok Chernogolovka 142432(SU)**

(72) Erfinder: **MERZHANOV, Alexandr Grigorievich ul. Tretya, 3-2 Moskovskaya obl. pos. Chernogolovka, 142432(SU)** Erfinder: **BOROVINSKAYA, Inna Petrovna ul.**

**Tretya, 3-2 Moskovskaya obl. pos. Chernogolovka, 142432(SU)** Erfinder: **JUKHVID, Vladimir Isaakovich ul. Pervaya, 2-18 Moskovskaya obl. pos. Chernogolovka, 142432(SU)** Erfinder: **KACHIN, Alexandr Rafaelievich proezd Stroitelei, 8-50 Moskovskaya obl. pos. Chernogolovka, 142432(SU)**

(74) Vertreter: **Hansen, Bernd, Dr. Dipl.-Chem. et al Hoffmann, Eitle & Partner Patent- und Rechtsanwälte Arabellastrasse 4 W-8000 München 81(DE)**

(54) **VERFAHREN ZUR HERSTELLUNG EINES LAMINIERTEN ERZEUGNISSES MIT VERSCHLEISSFESTER OBERFLÄCHE.**

(57) Das erfindungsgemäße Verfahren bezieht sich auf die Pulvermetallurgie

Das erfindungsgemäße Verfahren besteht darin, daß man auf eine metallische Grundmasse ein exothermes Gemisch aufbringt, den hergestellten Rohling in einer Wärmebehandlungszone unterbringt, in der ein Druck eines Gasmediums von etwa 1 bis etwa 100 atm erzeugt und eine Entflammung des exothermen Gemisches mit anschließendem Reagieren seiner Komponenten unter Bedingungen der Flammenführung bei einer Temperatur auslöst,die etwa um ein 1,6 bis 2,6faches die Schmelztemperatur der metallischen Grundmasse übersteigt, wobei der Prozeß bei einer solchen Wärmeabführung durchgeführt wird, daß lediglich die Decklage der metallischen Grundmasse schmilzt, wonach der Rohling bis zur Herstellung des Zielerzeugnisses abgekühlt wird.

Besonders wirksam kann die vorliegende Erfindung bei der Herstellung flacher Mehrlagenerzeugnisse verwendet werden, die unter Bedingungen eines intensiven Verschleisses aggressiver Medien bei hohen Temperaturen betrieben werden.

EP 0 423 338 A1

# VERFAHREN ZUR HERSTELLUNG EINES MEHRLAGENERZEUGNISSEN MIT EINER VERSCHLEISSFESTEN OBERFLÄCHE

Gebiet der Technik

Die vorliegende Erfindung bezieht sich auf die Pulvermetallurgie und betrifft insbesondere ein Verfahren zur Herstellung eines Mehrlagenerzeugnisses mit einer verschleißfesten Oberfläche.

Zugrundeliegender Stand der Technik

Die Mehrlagenerzeugnisse mit einer verschleißfesten Oberfläche aus Hartlegierungen auf der Basis von hochschmelzenden Verbindungen weisen eine hohe Härte (ober 60 Einheiten nach der HRC-Skala) auf, die eine hohe Verschleißfestigkeit in sich vereinigt.

Einige verschleißfeste Oberflächen der Mehrlagenerzeugnisse sind imstande, ihre Eigenschaften in einem bedeutenden Maße unter Bedingungen der Einwirkung von aggressiven Medien und bei hohen Temperaturen zu bewahren.

Besonders wirksam können die Mehrlagenerzeugnisse mit einer verschleißfesten Oberfläche unter Bedingungen eines intensiven Abriebverschleisses sowie bei anderen Arten des Verschleisses eingesetzt werden.

Unter flachen Erzeugnissen verstehen wir, z.B., verschiedene Konstruktionserzeugnisse, Reibpaare, verschleißfestes Futter, Preßwerkzeuge, verschiedene Schneidplättchen, Meißel zur Bodenauflockerung, Schaufeln der Mischer für Feuerfestmasse.

Unter einem flachen Erzeugnis kann außerdem der flache Teil eines Erzeugnisses einer beliebigen Form verstanden werden, auf dem eine verschleißfeste Oberfläche hergestellt worden ist.

Zur Zeit werden zahlreiche und verschiedene Verfahren zur Herstellung von Mehrlagenerzeugnissen mit einer verschleißfesten Oberfläche verwendet.

Es ist ein Verfahren zur Herstellung von Zweilagen-Gußrohren (US, A, 4217948) bekannt, welches eine Füllung einer Reaktionskammer mit einem Ausgangsgemisch zur Ausbildung der Lagen eines Rohres, eine Drehung der Kammer um deren Symmetrieachse und eine Entflammung des Gemisches mit dem anschließenden Reagieren der Komponenten des Gemisches beim Brennen einschließt.

Das Gemisch zur Ausbildung der Lagen des Rohres enthält Oxide der Metalle der Gruppen IV bis VI des Periodischen Systems, ein Reduktionsmittel, das aus der Gruppe gewählt ist, zu welcher Aluminium, Magnesium, Titan, Zirkonium gehören, ein Nichtmetall, das aus der Gruppe gewählt ist, zu welcher kohlenstoff, Bor und Silizium gehören, sowie nichtmetallische Oxide.

Die Reaktionskammer wird um deren Symmetrieachse in Drehung versetzt, und das Gemisch entflammt sich unter anschließendem Reagieren der Komponenten des Gemisches beim Brennen.

Das genannte Verfahren gestattet es, Zweilagenerzeugnisse von nur einer koaxialen Symmetrie, z.B., Buchsen, Rohre herzustellen.

Dieses Verfahren gestattet es jedoch nicht, flache Erzeugnisse herzustellen, weil als Verbrennungsprodukt eine Schmelze aus Komponenten des Ausgangsgemisches anfällt, das nur eine Drehfläche ausbilden kann, da es sich in einer Reaktionskammer befindet, die sich um ihre Symmetrieachse dreht.

Um das Gemisch aus den genannten Komponenten in Lagen trennen und ein Zweilagenerzeugnis ausbilden zu können, ist außerdem bei dem genannten Verfahren die Einwirkung einer Zentrifugalkraft erforderlich, was jedoch zu einer bedeutenden Erschwerung des technologischen Prozesses zur Herstellung eines Mehrlagenerzeugnisses führt und die Verwendung von Schnellzentrifugen komplizierter Bauart notwendig macht, was eine Verteuerung des Verfahrens zur Herstellung von Mehrlagenerzeugnissen bedeutet.

Das genannte Verfahren gestattet es außerdem nicht, eine verschleißfeste Oberfläche auf der metallischen Grundmasse des Erzeugnisses auszubilden, weil unter Bedingungen der Einwirkung einer Zentrifugalkraft auf die Schmelze aus Gemischkomponenten die Abkühlgeschwindigkeit der genannten Schmelze zunimmt, da unter Bedingungen der koaxialen Symmetrie die Wärmeabführung über das gesamte Volumen des Erzeugnisses erfolgt. Das führt dazu, daß an der Phasengrenze verschleißfeste Oberfläche - metallische Grundmasse eine Oxidschicht des Metalls des Reduktionsmittels entsteht, die die Herstellung einer festen Haftung der ausgebildeten verschleißfesten Oberfläche mit der metallischen Grundmasse verhindert.

Es ist ein Verfahren zur Herstellung eines Erzeugnisses mit einer verschleißfesten Oberfläche (SU, A, 221945) bekannt, welches darin besteht, daß man auf die metallische Grundmasse des Erzeugnisses ein

2

Gemisch zur Ausbildung einer verschleißfesten Oberfläche aufbringt und den erhaltenen Rohling in eine Wärmebehandlungszone einsetzt, in der der Rohling einer Wärmebehandlung ausgesetzt wird. Anschließend wird der Rohling bis zur Herstellung des Zielerzeugnisses abgekühlt.

Als Gemisch zur Ausbildung der verschleißfesten Oberfläche verwendet man Wolframkarbidpulver.

Auf die Oberfläche der Wolframkarbidschicht wird Kupferpulver als Bindemittel aufgebracht.

Der erhaltene Rohling wird in die Wärmebehandlungszone (eine Heizeinrichtung, die eine hohe Temperatur erzeugen kann) eingesetzt und in einer neutralen Atmosphäre auf eine Temperatur erwärmt, die die Schmelztemperatur der Bindekomponente übersteigt. Dann wird der Rohling bis zur Herstellung des Zielerzeugnisses abgekühlt.

Das oben beschriebene Verfahren ist durch eine einfache Technologie gekennzeichnet.

Die Verwendung dieses Verfahrens ermöglich die Herstellung eines Mehrlagenerzeugnisses, das eine Decklage mit einer hohen Verschleißfestigkeit aufweist.

Die Homogenität der verschleißfesten Oberfläche ist dabei jedoch nicht ausreichend hoch, was auf die Bedingungen des Zerfließens der Bindekomponente über die Poren der harten hochschmelzenden Verbindung zurückzuführen ist.

Die nach dem genannten Verfahren hergestellten Mehrlagenerzeugnisse mit einer verschleißfesten Oberfläche weisen eine nicht hohe Haftfestigkeit der Haftung der verschleißfesten Oberfläche mit der Grundmasse des Erzeugnisses auf und können unter Bedingungen hoher Temperaturen nicht betrieben werden.

Das läßt sich dadurch erklären, daß man als Bindemetall Kupfer verwendet, das eine niedrige Schmelztemperatur und niedrige Festigkeitswerte besitzt.

Eine weitere Beschränkung für die Anwendung des genannten Verfahrens besteht darin, daß alle zu verwendenden Bindemetalle eine Schmelztemperatur aufzuweisen haben, die niedriger als die Schmelztemperatur des Werkstoffes des zu bearbeitenden Werkstückes ist. Anderenfalls schmilzt das Werkstück, weil das Verfahren eine Erwärmung des gesamten Volumens des Werkstückes mit auf dieses aufgetragenen Sinterwerkstoffschichten vorsieht. Dadurch wird die Wahl des Metalls für die Bindekomponente beschränkt.

Das genannte Verfahren nimmt außerdem für seine Durchführung viel Zeit in Anspruch, ist mehrstufig und mit einem hohen Energieaufwand verbunden. Es umfaßt eine Stufe der vorherigen Herstellung von hochschmelzenden Verbindungen und deren anschließende Behandlung nach den bekannten Verfahren der Pulvermetallurgie.

Offenbarung der Erfindung

Der vorliegenden Erfindung liegt die Aufgabe zugrunde, ein Verfahren zur Herstellung eines Mehrlagenerzeugnisses mit einer verschleißfesten Oberfläche zu entwickeln, das durch eine Änderung der Bedingungen der Wärmebehandlung und die Wahl von bestimmten Werkstoffen es gestattet, eine hohe Haftfestigkeit der verschleißfesten Oberfläche mit der metallischen Grundmasse des Erzeugnisses zu erzielen und den technologischen Prozeß der Herstellung eines Mehrlagenerzeugnisses zu vereinfachen.

Die gestellte Aufgabe wird dadurch gelöst, daß ein Verfahren zur Herstellung eines Mehrlagenerzeugnisses mit einer verschleißfesten Oberfläche vorgeschlagen wird, welches darin besteht, daß man auf die metallische Grundmasse eines Rohlings eines Erzeugnisses ein Gemisch für die Ausbildung einer verschleißfesten Oberfläche aufbringt und den erhaltenen Rohling in einer Wärmebehandlungszone unterbringt, wo dieser einer Wärmebehandlung ausgesetzt wird, wonach der Rohling bis zur Herstellung des Zielerzeugnisses abgekühlt wird, wobei man erfindungsgemäß als Gemisch für die Ausbildung der verschleißfesten Oberfläche ein exothermes Gemisch, enthaltend ein Pulver des Oxydes mindestens eines Metalls, ein Pulver eines Reduktionsmittels, das aus der Aluminium, Magnesium, Titan, Zirkonium enthaltenen Gruppe gewählt wurde welche im einzelnen oder in Kombination genommen werden, sowie ein Pulver mindestens eines Nichtmetalls, das aus der Kohlenstoff, Bor, Silizium enthaltenen Gruppe gewählt wurde, oder ein Pulver von Bor- und/oder Siliziumoxyd, verwendet und in der Wärmebehandlungszone einen Druck eines Gasmediums von etwa 1 bis etwa 100 atm erzeugt und die Wärmebehandlung des Rohlings durch die Entflammung einer Schicht des exothermen Gemisches mit anschließendem Reagieren der Komponenten desselben unter Bedingungen der Flammenführung bei einer Temperatur, die um etwa ein 1,6 bis 2,6faches die Schmelztemperatur der metallischen Grundmasse des Rohlings des Erzeugnisses übersteigt, bei einer solchen Wärmeabführung vornimmt, daß sich das Schmelzen lediglich der Decklage der metallischen Grundmasse des Rohlings des Erzeugnisses vollzieht.

Das erfindungsgemäße Verfahren zur Herstellung eines Mehrlagenerzeugnisses mit einer verschleißfesten Oberfläche gestattet es, als metallische Grundmasse des Erzeugnisses eine breite Palette metallischer Werkstoffe mit einer Schmelztemperatur von etwa 100 bis etwa 2000°C zu verwenden. Als solche Werkstoffe können sowohl Reinmetalle wie Eisen, Nickel, Kobalt, Vanadin, Chrom, Titan und andere, als auch verschiedene Legierungen verwendet werden.

Als metallische Grundmasse können Stähle und Roheisen verschiedener Zusammensetzung, die, z.B., dementsprechend enthalten (Masse-%):

a) Chrom - 10 bis 20; Nickel - 9 bis 20; Titan - 0,5 bis 10; Kohlenstoff - 0,05 bis 0,1: Eisen - Rest;

b) Kohlenstoff - 0,2 bis 0,45, Chrom - 1,2 bis 1,4, Mangan 1,2 bis 1,4, Silizium - 1,2 bis 1,4, Eisen - Rest;

c) Kohlenstoff - 1,0 bis 1,2 Mangan 10 bis 13; Eisen - Rest;

d) Kohlenstoff - 3,0 bis 3,6, Silizium - 1,1 bis 2,9; Mangan - 0,3 bis 3,6; Eisen-Rest; e) Kohlenstoff - 2,4 bis 2,9 Silizium 10 bis 1,6, Mangan - 0,2 bis 1,0, Eisen - Rest.

Die Verwendung des erfindungsgemäßen Verfahrens gestattet es, die Qualität von Mehrlagenerzeugnissen durch eine Erhöhung der Festigkeit der Haftung der verschleißfesten Oberfläche mit der metallischen Grundmasse der Erzeugnisse zu verbessern, den technologischen Prozeß der Herstellung eines Mehrlagenerzeugnisses zu vereinfachen.

Das erfindungsgemäße Verfahren sieht die Verwendung eines billigen Rohstoffes, u.z. Metalloxide vor und erfordert keinen Energieaufwand für den Betrieb zusätzlicher Ausrüstungen, weil das Verfahren unter Ausnutzung der inneren während der Verbrennung des exothermen Gemisches entstehenden Energie durchgeführt wird.

Durch die Verwendung eines exothermen Gemisches, das ein Pulver des Oxydes mindestens eines Metalls, ein Pulver eines Reduktionsmittels, das aus der Aluminium, Magnesium, Titan, Zirkonium enthaltenen Gruppe gewählt wurde, welche im einzelnen oder in Kombination genommen werden, sowie ein Pulver mindestens eines Nichtmetalls, das aus der Kohlenstoff, Bor, Silizium enthaltenen Gruppe gewählt wurde, oder ein Pulver von Bor- und/oder Siliziumoxyd enthält, wird es möglich, den Prozeß bis zur Herstellung eines Mehrlagenerzeugnisses mit einer verschleißfesten Oberfläche unter Ausnutzung der inneren Energie des exothermen Gemisches durchzuführen, ohne daß dabei eine Energie von außen einbezogen wird.

Die Verwendung der genannten Komponenten des exothermen Gemisches ist durch die vorgegebene chemische und Phasenzusammensetzung der verschleißfesten Oberfläche bedingt, die bei einem flachen Mehrlagenerzeugnis gewonnen werden muß.

Bei der Entflammung des exothermen Gemisches wird eine Verbrennungsreaktion eingeleitet, die sich durch eine spontane Fortpflanzung der Verbrennungszone (der Reaktionsfront) über das genannte Gemisch infolge der Warmeübertragung von der heißen Schicht des exothermen Gemisches auf die Kalte Schicht derselben vollzieht.

Die Verbrennungstemperatur des exothermen Gemisches übersteigt die Schmelztemperatur der Verbrennungsprodukte, so daß die Verbrennungsprodukte im flüssigem Zustand vorliegen.

Infolge der Verwendung der genannten Komponenten des exothermen Gemisches bilden sich während der Verbrennung bei der oben angegebenen Temperatur eine Schmelze aus hochschmelzenden Verbindungen sowie gasförmige Verbrennungsreaktionsprodukte.

Um ein Verspritzen der Schmelze aus hochschmelzenden Verbindungen durch die gasförmigen Verbrennungsreaktionsprodukte verhindern und diese Schmelze an der Oberfläche der metallischen Grundmasse zurückhalten zu können, wird in der Wärmebehandlungszone der genannte Druck erzeugt, dessen Grenzen von der Menge der sich während der Verbrennung des zu verwendenden exothermen Gemisches entwickelnden gasförmigen Produkte bestimmt werden.

Während der Verbrennung entsteht eine Zweiphasen-Schmelze, die eine metallische Grundmasse, die aus hochschmelzenden Verbindungen entsprechender Elemente besteht, welche zur Zusammensetzung der Komponenten des exothermen Gemisches (Karbide, Boride, Silizide oder Hartlegierungen auf deren Basis) gehören, sowie eine Oxidphase, d.h., ein Metalloxyd des Reduktionsmittels enthält.

Infolge unterschiedlicher spezifischer Gewichte der Verbrennungsprodukte vollzieht sich eine Abtrennung des Metalloxydes des Reduktionsmittels von der "metallischen Phase". Ein leichteres Oxyd des Reduktionsmittels schwimmt an den Schmelzspiegel auf, indem es eine Decklage eines Mehrlagenerzeugnisses bildet, während sich eine schwerere Hartlegierung oder eine hochschmelzende Verbindung an der Oberfläche der metallischen Grundmasse absetzt, indem sie die zweite Lage, d.h., eine verschleißfeste Oberfläche des Erzeugnisses bildet. Die Oxydschicht des Reduktionsmittels weist keine Haftung mit der Schicht der Hartlegierung oder der hochschmelzenden Verbindung auf, und sie läßt sich leicht entfernen.

Durch die Verwendung der genannten Komponenten des exothermen Gemisches tritt mit der metallischen Grundmasse die Zweiphasen-Schmelze (Metalloxyd des Reduktionsmittels und hochschmelzende Verbindungen oder eine Hartlegierung auf deren Basis) in Berührung welche Zweiphasen-Schmelze eine hohe, wie oben angegeben, Verbrennungstemperatur hat. Diese Temperatur soll einerseits ein Schmelzen der Decklage der metallischen Grundmasse gewährleisten und andererseits eine Ausscheidung der Hartlegierung aus der Zweiphasen-Schmelze und deren Absetzen an der Oberfläche der metallischen Grundmasse ermöglichen.

Unter den Bedingungen einer Berührung der Schmelze mit der metallischen Grundmasse wird eine solche Wärmeabführung erzeugt, daß infolge eines schroffen Temperaturabfalls der Schmelze nur die Decklage der metallischen Grundmasse dazu kommt, erschmolzen zu werden.

Die Schmelze der Decklage der metallischen Grundmasse wird mit der Schmelze der Hartlegierung vermischt, indem sie eine gewisse Übergangsschicht bildet, welche sowohl Komponenten der metallischen Grundmasse, als auch Komponenten des Verbrennungsproduktes des exothermen Gemisches, d.h., der Hartlegierung enthält.

Der erfindungsgemäße Temperaturbereich wird durch folgenden Faktor bestimmt.

Bei einer Verbrennungstemperatur, die unter dem erfindungsgemäßen Temperaturbereich liegt, weist das Metalloxyd des Reduktionsmittels eine sehr hohe Viskosität auf, wodurch es unmöglich wird, den Austritt der Hartlegierung an die Oberfläche der metallischen Grundmasse im Kristallisationszustand der Oxydphase zu verwirklichen (die Tropfen der Hartlegierung bleiben in der Oxydschicht zurück).

Bei niederen Temperaturen der Schmelze ist außerdem die Temperatur an der Oberfläche der metallischen Grundmasse infolge einer Wärmeabführung in die metallische Grundmasse niedriger als die Schmelztemperatur der metallischen Grundmasse.

Deshalb findet kein Schmelzen der Decklage der metallischen Grundmasse statt; folglich vollzieht sich auch keine Verschiebung des Werkstoffes der Decklage der metallischen Grundmasse mit der Schmelze der Hartlegierung, wodurch die Festigkeit der Haftung der verschleißfesten Oberflächemit der metallischen Grundmasse negativ beeinflußt wird.

Im Rahmen des erfindungsgemäßen Temperaturbereiches vollziehen sich ein vollständiges Absetzen der Hartlegierung an der Oberfläche der metallischen Grundmasse und ein Schmelzen der Decklage derselben. Die Dicke der Schmelzzone der metallischen Grundmasse ist durch einen Bereich beschränkt, in dem die Wärmezuführung aus der Schmelze die Wärmeabführung In den festen Teil der metallischen Grundmasse übersteigt.

Bei Temperaturen, die den erfindungsgemäßen Temperaturbereich übersteigen, entsteht ein Komplex folgender negativer Erscheinungen:

- es findet eine Überhitzung des festen Teils der metallischen Grundmasse statt, was zu einer Verschlechterung der physikalisch-mechanischen Kennwerte derselben (Kornvergrößerung, Festigkeitsverlust usw.) führt;
- der größte Teil der metallischen Grundmasse schmilzt und geht in den Bestand der verschleißfesten Oberfläche über, wodurch die physikalisch-mechanischen Kennwerte der metallischen Grundmasse verschlechtert werden.

Zur Herstellung von Mehrlagenerzeugnissen, die für den Einsatz unter Bedingungen eines intensiven Abriebverschleisses vorgesehen sind, ist es zweckmäßig, als exothermes Gemisch ein exothermes Gemisch zu verwenden, das ein Nichtmetall, ein Reduktionsmittel, Titan- Chrom- Eisen- und/oder Nickel- und/oder Kobaltoxyd bei folgendem Verhältnis derselben, Masse% enthält:

Nichtmetall                                    0,01 bis 7

Reduktionsmittel                               22 bis 32

Titanoxyd                                      17 bis 4

Chromoxyd                                      25 bis 50

Eisen- und/oder Nickel und/oder

Kabaltoxyd                                     Rest

Die genannten Komponenten, welche im genannten Verhältnis zueinander verwendet werden, gestatten es, bei Herstellung eines Mehrlagenerzeugnisses eine verschleißfeste Oberfläche desselben mit einer vorgegebenen chemischen Zusammensetzungzu erhalten, die eine hohe Härte und Verschleißfestigkeit aufweist. Die Festigkeit der Haftung der verschleißfesten Oberfläche mit der metallischen Grundmasse wird dabei ausreichend hoch sein.

Bei der Herstellung von Mehrlagenerzeugnissen mit einer verschleißfesten Oberfläche an einem kleinen Abschnitt der Oberfläche des Mehrlagenerzeugnisses wird die Qualität des Rohlings des Erzeugnisses davon abhängig sein, wie ist das Verhältnis der Masse des exothermen Gemisches zu der Größe der Oberfläche der metallischen Grundmasse, auf welcher eine verschleißfeste Oberfläche auszubilden ist.

In diesem Fall ist es wünschtenswert, daß das Verhältnis der Masse des exothermen Gemisches zu der Größe der Oberfläche der metallischen Grundmasse, auf welcher eine verschleißfeste Oberfläche auszubilden ist, etwa 2 bis 40 zu etwa 1 g/cm² beträgt.

Bei einem Überschreiten des genannten Bereiches des Verhältnisses der Masse des exothermen Gemisches zu der Fläche der metallischen Grundmasse, auf welcher eine verschleißfeste Oberfläche auszubilden ist (weniger als 2:1 g/cm²) werden nicht nur eine Vergrößerung der Festigkeit der Haftung der verschleißfesten Oberfläche mit der metallischen Grundmasse, sondern auch die Ausbildung der verschleißfesten Oberfläche selbst problematisch, weil sich an dem Wärmeaustausch mit der Schmelze der Verbrennungsprodukte des exothermischen Gemisches nicht nur der Abschnitt der Grundmasse, an welchem die verschleißfeste Oberfläche auszubilden ist, sondern auch die gesamte metallische Grundmasse beteiligen. In diesem Fall verläuft der Prozeß der Ausbildung einer verschleißfesten Oberfläche unter Bedingungen einer erhöhten Wärmeabführung aus der Zone der Ausbildung der verschleißfesten Oberfläche in den "kalten" Teil der metallischen Grundmasse. Im Ergebnis kommt die Schmelze der hochschmelzenden Verbindung nicht dazu, über die Oberfläche der metallischen Grundmasse (die Geschwindigkeit des Temperaturabfalls ist hoch) zu zerfließen, sie kristallisiert schnell, wodurch die Ganzheit der Verschleißfesten Oberfläche verletzt und die Qualität des Mehrlagenerzeugnisses insgesamt verschlechtert werden.

Eine Vergrößerung der Masse des exothermen Gemisches pro eine Einheit der Fläche der metallischen Grundmasse führt zu einer Vergrößerung der Dicke der Schmelzschicht. Die Verbrennung des exothermen Gemisches vollzieht sich unter Bildung einer gewissen Menge an gasförmigen Produkten, welche die Schmelze aus flüssigen Produkten verlassen, indem sie durch die Dicke der Schmelze an die Oberfläche durchdringen. Deshalb besteht unter den oben beschriebenen Bedingungen der Wärmeabfuhrung eine gewisse optimale Dicke der Schmelzschicht, bei der die gasförmigen Produkte Zeit haben, die Schmelze vor deren Kristallisation zu verlassen, anderenfalls bleiben die gasförmigen Produkte im Schmelzgut zurück und bilden Poren, welche die Festigkeit der verschleißfesten Oberfläche vermindern.

Ein Verhältnis der Masse des exothermen Gemisches zu der Größe der herzustellenden verschleißfesten Oberfläche von etwa 40 : 1 g/cm² bestimmt auch jene Dicke der Schmelzeschicht, bei deren Überschreiten die gasförmigen Reaktionsprodukte nicht dazu kommen, die Schmelze zu verlassen; das hat zur Folge, daß die verschleißfeste Oberfläche Poren und Lunker aufweist, die sowohl die Festigkeit der verschleißfesten Oberfläche selbst, als auch die Festigkeit der Haftung derselben mit der metallischen Grundmasse vermindern.

Bei der Herstellung von Mehrlagenerzeugnissen mit einer verschleißfesten Oberfläche, deren Flächeninhalt dem Flächeninhalt der gesamten metallischen Grundmasse gleich ist, wird die Qualität des Erzeugnisses vom Verhältnis der Masse des exothermen Gemisches zu der Masse der metallischen Grundmasse stark beeinflußt.

In diesem Fall ist es günstig, daß das Verhältnis der Masse des exothermen Gemisches zur Masse der metallischen Grundmasse des Erzeugnisses etwa 0,1 bis etwa 5 beträgt.

Bei einem Verhältnis der Masse des exothermen Gemisches zur Masse der metallischen Grundmasse von über 5 findet ein Schmelzen nicht nur der Decklage der metallischen Grundmasse statt. Der größte Teil des Metalls, aus welchem die metallische Grundmasse besteht, geht in den Bestand der verschleißfesten Oberfläche über, indem er die Verschleißfestigkeit der Oberfläche und andere physikalisch-mechanische Kennwerte des Erzeugnisses verschlechtert.

Bei einem Verhältnis der Masse des exothermen Gemisches zur Masse der metallischen Grundmasse von unter 0,1 werden Bedingungen des Zerfließens der Schmelze aus Verbrennungsprodukten des exothermen Gemisches über die metallische Grundmasse sowie Bedingungen des Vermischens des Metalls der Grundmasse mit der Schmelze aus dem Werkstoff der verschleißfesten Oberfläche verschlechtert. Außerdem wird die Ganzheit der verschleißfesten Oberfläche verletzt. All das führt zu einer Verminderung der Festigkeit der Haftung der verschleißfesten Obeffläche mit der metallischen Grundmasse.

Zu einer zusätzlichen Vergrößerung der Festigkeit der Haftung der verschleißfesten Oberfläche mit der metallischen Grundmasse wird die metallische Grundmasse zweckmässigerweise vor der Entflammung auf eine Temperatur von etwa 0,2 bis etwa 0,8 deren Schmelztemperatur vorgewärmt.

In dem von etwa 0,2 bis etwa 0,8 der Schmelztemperatur der metallischen Grundmasse liegenden Temperaturbereich nimmt die Zerfließgeschwindigkeit der schmelzflüssigen Verbrennungsprodukte des exothermen Gemisches zu, wodurch die Bedingungen für ein Vermischen des Schmelzgutes des Oberflächenschicht der metallischen Grundmasse mit den schmelzflüssigen Verbennungsprodukten des exothermen Gemisches verbessert werden. Dies führt zur Erhöhung der Haftfestigkeit der verschleißfesten Oberfläche der metallischen Grundmasse.

Der untere Temperaturwert ist durch die minimale Temperatur bedingt, bei der die Bedingungen für ein Zerfließen der schmelzflüssigen Produkte des exothermen Gemisches über die Oberfläche der metallischen Grundmasse und ein Vermischen der schmelzflüssigen Verbrennungsprodukte mit dem Schmelzgut der Oberflächenschicht des Werkstoffes der metallischen Grundmasse verbessert werden.

Der obere Temperaturwert widerspiegelt jene Temperatur der metallischen Grundmasse, oberhalb der nicht nur eine Erhöhung der Haftfestigkeit der verschleißfesten Oberfläche mit der metallischen Grundmasse erzielt werden kann, sondern die Herstellung des Mehrlagenerzeugnisses selbst nicht möglich ist, da dabei die metallische Grundmasse im ganzen schmilzt.

Zur Herstellung von Mehrlagenerzeugnissen mit erhöhten Betriebseigenschaften wird es empfohlen, daß das exotherme Gemisch Kohlenstoff in einer Menge von etwa 20 bis etwa 40% seiner stöchiometrischen Menge zusätzlich enthält, während Luft als Gasmedium verwendet werden kann.

Die angegebene Menge an dem zusätzlichen Kohlenstoff erhöht die Verschleißfestigkeit und Härte der herzustellenden verschleißfesten Oberfläche des Mehrlagenerzeugnisses, während die Verwendung der Luft eine Bildung des Kohlenstoffoxides ausschließt, was zum Umweltschutz beiträgt.

Es ist zweckmäßig, zwischen der metallischen Grundmasse und der Schicht des exothermen Gemisches ein Gemisch zur Ausbildung einer Zwischenlage unterzubringen, die ein Pulver des Oxydes eines Metalls, das zur Zusammensetzung der metallischen Grundmasse gehört, mit einem Reduktionsmittel oder ein Pulver des Oxydes eines Metalls, das zur Zusammensetzung des exothermen Gemisches gehört, mit einem Reduktionsmittel oder ein Pulver eines Metalls, das zur Zusammensetzung der metallischen Grundmasse gehört, und/oder ein Pulver eines Metalls, das zur Zusammensetzung des exothermen Gemisches gehört, enthält.

Das Vorhandensein eines Gemisches zur Ausbildung der Zwischenlage, das die genannten Komponenten enthält, gewährleistet die Bildung einer Schmelze der Zwischenlage, die einerseits mit der Schmelze des Metalls, das zur Zusammensetzung der metallischen Grundmasse gehört, und andererseits mit der Schmelze der Verbrennungsprodukte des exothermen Gemisches vermischt wird, wobei sie kristallisiert und eine Übergangszone bildet, deren Werkstoff erhöhte Festigkeitswerte aufweist, was zur einer Erhöhung der Festigkeit der Haftung der verschleißfesten Oberfläche mit der metallischen Grundmasse führt.

Einen großen Einfluß auf die Festigkeit der Haftung der verschleißfesten Oberfläche mit der metallischen Grundmasse übt die Menge des für die Ausbildung der Zwischenlage einzusetzenden Gemisches aus.

Es ist wünschenswert, daß das Verhältnis der Masse des Gemisches für die Ausbildung der Zwischenlage zu der Masse des exothermen Gemisches etwa 1 k (2,5 bis 25) beträgt.

Es wurde experimentell nachgewiesen, daß bei dem genannten Verhältnis der Masse des Gemisches für die Ausbildung der Zwischenlage zur Masse des exothermen Gemisches eine besonders gute Haftung des verschleißfesten Oberfläche mit der metallischen Grundmasse erzielt wird.

Bei einem Verhältnis der Masse des Gemisches für die Ausbildung der Zwischenlage zur Masse des exothermen Gemisches von unter 1 : 25 wird die Festigkeit der Haftung der verschleißfesten Oberfläche mit der metallischen Grundmasse verschlechtert.

Bei einem Verhältnis zwischen den Massen von über 1:2,5 nimmt die Haftfestigkeit wesentlich nicht zu, dabei werden jedoch die Verschleißfestigkeit und die Härte der verschleißfesten Oberfläche vermindert.

Zur Herstellung einer verschleißfesten Oberfläche an einem kleinen Abschnitt der Oberfläche des Mehrlagenerzeugnisses wird zweckmäßigerweise auf die Schicht des exothermen Gemisches ein Gemisch aus Molybdän- und Magnesiumoxyd zur Schaffung einer entflammbaren Schicht aufgebracht.

Das genannte Gemisch weist eine hohe Brenngeschwindigkeit auf, weshalb beim Aufbringen in einer Schicht auf das exotherme Gemisch bringt es sofort die gesamte Oberfläche des exothermen Gemisches zur Entflammung. Anschließend wird eine parallel zu der Ebene der metallischen Grundmasse verlaufende Verbrennungsfront ausgebildet. Indem sich die Verbrennungsfront lagenweise in Richtung der metallischen Grundmasse fortpflanzt, erreicht sie die Oberfläche der metallischen Grundmasse gleichzeitig an allen Punkten. Auf diese Weise wird die Wärmezuführung zu der Oberfläche der Grundmasse pro Zeiteinheit vergrößert, während die Wärmeabführung unveränderlich bleibt. Dadurch wird die Geschwindigkeit der Wärmerelaxation in den "kalten Bereich" der metallischen Grundmasse vermindert. Es vollzieht sich ein Schmelzen der Decklage der metallischen Grundmasse und deren Vermischen mit der Schmelze aus Verbrennungsproduktendes exothermen Gemisches, was zu einer Erhöhung der Festigkeit der Haftung der verschleißfesten Oberfläche mit der metallischen Grundmasse führt.

Bevorzugte Durchführungsvariante der Erfindung

Nach einem der Verfahren, z.B., durch Vermischen, wird ein exothermes Gemisch für die Ausbildung einer verschleißfesten Oberfläche aufbereitet, das ein Pulver des Oxydes mindestens eines Metalls, ein Pulver eines Reduktionsmittels, das aus der Aluminium, Titan, Magnesium, Zirkonium enthaltenen Gruppe gewählt wurde, die im einzelnen oder in Kombinations genommen werden, sowie ein Pulver mindestens eines Nichtmetalls, das aus der Bor, Kohlenstoff, Silizium enthaltenen Gruppe gewählt wurde, oder ein Pulver von Bor-und/oder Siliziumoxyd enthält.

Die genannten Komponenten wurden ausgehend davon gewählt, daß bei deren Umsetzung unter den Verhältnissen der Flammenführung einerseits die Bildung von Verbrennungsprodukten mit einer vorgegebenen chemischen und Phasenzusammensetzung und mit einer hohen Verschleißfestigkeit, aus welchen anschließend eine verschleißfeste Oberfläche ausgebildet wird, und andererseits die Bildung einer Schmelze aus Verbrennungsprodukten mit einer vorgegebenen Temperatur stattfinden, die in Verbindung mit dem Druck des Gasmediums und mit einer vorgegebenen Wärmeabführung in die metallische Grundmasse die Ausbildung einer verschleißfesten Oberfläche und deren feste Haftung mit der metallischen Grundmasse gewährleistet.

Das exotherme Gemisch für die Ausbildung einer verschleißfesten Oberfläche wird in Form einer Schicht auf die Oberfläche der metallischen Grundmasse aufgebracht.

Der hergestellte Rohling wird in einer Wärmebehandlungszone untergebracht, und in der Wärmebehandlungszone wird der Druck eines Gasmediums, z.B., des Stickstoffmediums, in einer Höhe von etwa 1 bis etwa 100 atm erzeugt.

Dann wird nach einem der Verfahren, z.B., mittels einer glühenden Wolframspirale, die Entflammung des exothermen Gemisches ausgelöst.

Die Wärmebehandlung wird unter Bedingungen der Flammenführungbei einer Temperatur, die die Schmelztemperatur der metallischen Grundmasse um etwa ein 1,6 bis 2,6faches übersteigt, und bei einer solchen Wärmeabführung durchgeführt, daß lediglich die Decklage der metallischen Grundmasse schmilzt.

Nach der beendeten Wärmebehandlung wird der Druck abgebaut, und der Rohling wird bis zur Herstellung des Zielerzeugnisses abgekühlt.

Im Verlauf der Wärmebehandlung findet folgendes statt;

Es bildet sich eine Zweiphasen-Schmelze, die eine "metallische" Phase, zu deren Zusammensetzung hochschmelzende Verbindungen entsprechender Komponenten des exothermen Gemisches (Karbide, Boride, Silizide oder Hartlegierungen auf deren Basis) gehören, sowie als Oxydphase- das Oxyd eines Metalls des Reduktionsmittels.

Außerdem bildet sich während der Verbrennung eine gewisse Menge an gasförmigen Produkten.

Da das Oxyd des Reduktionsmittels und die "metallische" Phase unterschiedliche spezifische Gewichte haben, vollzieht sich deren Trennung in zwei Schichten.

Ein leichteres Oxyd des Reduktionsmittels wird dabei an die Oberfläche der Schmelze verdrängt, indem es die Decklage eines Mehrlagenerzeugnisses bildet, während sich die schwerere "metallische" Phase an der Oberfläche der nichtmetallischen Grundmasse absetzt, indem sie die untere Lage, eine verschleißfeste Oberfläche bildet.

Im Ergebnis einer Berührung der Schmelze aus Verbrennungsprodukten des exothermen Gemisches mit der metallischen Grundmasse wird solch eine Wärmeabführung erzeugt, daß ein schroffer Temperaturabfall der Schmelze geschieht, so daß es nur zum Schmelzen der Decklage der metallischen Grundmasse kommt. Die Schmelze der Decklage der metallischen Grundmasse vermischt sich mit der Schmelze aus der Hartlegierung, indem sie eine gewisse Übergangsschicht bildet, die Komponenten der metallischen Grundmasse und der Hartlegierung enthält.

Der Prozeß der Phasentrennung des Oxydes des Reduktionsmittels von der "metallischen" Phase und das Zerfließen der flüssigen "metallischen" Phase über die Oberfläche der metallischen Grundmasse werden durch zwei folgende Vorgänge verhindert:

1) die entstandenen gasförmigen Produkte sind bestrebt, die Schmelze zu verlassen, indem sie diese verspritzen und von der Oberfläche der metallischen Grundmasse ablösen;

2) es geschieht ein schneller Abfall der Temperatur der Schmelze, weil sie mit der kalten metallischen Grundmasse in Berührung steht.

Um ein Verspritzen der Schmelze aus hochschmelzenden Verbindungen durch die gasförmigen Verbrennungsprodukte verhindern und die Schmelze an der Oberfläche der metallischen Grundmasse zurückhalten zu können, wird in der Wärmebehandlungszone ein Druck eines Gasmediums in Höhe von etwa 1 bis etwa 100 atm erzeugt, dessen Grenzwerte von der Menge der gasförmigen Produkte abhängig sind, die sich während der Verbrennung des exothermen Gemisches entwickeln.

Eine weitere Funktion des Druckes besteht in der Aufrechterhaltung der oben angegeben Temperatur der Schmelze innerhalb einer für die Ausbildung einer verschleißfesten Oberfläche erforderlichen Zeit, weil bei einer Berührung der Schmelze mit der Oberfläche der metallischen Grundmasse ein schneller Abfall der Temperatur derselben stattfindet.

Es wurde experimentell nachgewissen, daß es unmöglich ist, bei einem Druck von unter 1 atm die Schmelze aus den Verbrennungsprodukten des exothermen Gemisches an der Oberfläche der metallischen Grundmasse zurückzuhalten.

Ein Druck von 100 atm reicht aus, daß sogar bei einer sehr starken Gasentwicklung während der Verbrennung die gasförmigen Produkte in Form von einzelnen kleinen Blasen die Schmelze verlassen, ohne dabei die Ausbildung einer verschleißfesten Oberfläche zu verhindern.

Eine weitere Steigerung des Druckes führt zu einer Temperaturerhöhung der Verbrennungsprodukte des exothermen Gemisches und zu einer Überschreitung des genannten Bereiches der Temperatur, welche etwa um ein 1,6 bis 2,6faches die Schmelztemperatur der metallischen Grundmasse des Rohlings übersteigen soll.

Bei Temperaturen, die unter dem erfindungsgemäßen Temperaturbereich liegen, ist die Viskosität des Metalloxydes des Reduktionsmittels sehr hoch, so daß es nicht möglich ist, den Austritt der Hartlegierung an die Oberfläche der metallischen Grundmasse im Kristallisationszustand der Oxydphase zu verwirklichen.

In diesem Fall wird die Temperatur an der Oberfläche der metallischen Grundmasse unter der Schmelztemperatur derselben infolge der Wärmeabführung in die metallische Grundmasse liegen.

Deshalb findet kein Schmelzen der Decklage der metallischen Grundmasse und folglich kein Vermischen des Werkstoffes der metallischen Grundmasse mit der Schmelze der Hartlegierung statt, was sich auf der Festigkeit der Haftung der verschleißfesten Oberfläche mit der metallischen Grundmasse negativ auswirkt.

Wenn die Temperatur der Verbrennung des exothermen Gemisches die Schmelztemperatur der metallischen Grundmasse des Rohlings mehr als um das 2,6fache übersteigt, findet eine Überhitzung des harten Teils der metallischen Grundmasse statt, was zu einer Senkung der physikalisch-mechanischen Kennwerte derselben (Kornvergrößerung, Harteverlust, Festigkeitsverlust usw.) führt.

Zur Herstellung von Mehrlagenerzeugnissen, welche für den Betrieb unter Bedingungen eines intensiven Abriebverschleisses vorgesehen sind, wird es empfohlen, als exothermes Gemisch ein Gemisch zu verwenden, das ein Nichtmetall, ein Reduktionsmittel, Titan- Eisen- und/oder Nickel- und/oder Kobaltoxyd, Chromoxid bei folgendem Verhältnis der Komponenten zueinander (Masse%) enthält:

| Nichtmetall | 0,01 bis 7 |
|---|---|
| Reduktionsmittel | 22 bis 32 |
| Titanoxy | 17 bis 4 |
| Chromoxyd | 25 bis 50 |
| Eisen- und/oder Nickel- und oder Kobaltoxyd | Rest |

Die Verwendung der genannten Komponenten beim genannten Verhaltnis derselben zueinander gestattet es, Mehrlagenerzeugnissemit einer verschleißfesten Oberfläche herzustellen, die eine vorgegebene chemische Zusammensetzung, eine hohe Härte und Verschleißfestigkeit aufweist.

Die Festigkeit der Haftung der verschleißfesten Oberfläche mit der metallischen Grundmasse wird ausreichend hoch sein.

Liegt der Titanoxydgehalt unter 4 Masse-%, wird die verschleißfeste Oberfläche infolge eines Mangels an Karbid, Borid und/oder Titansilizid, das eine hohe Mikrohärte und Verschleißfestigkeit aufweist, an ihrer Verschleißfestigkeit einbüßen. Ist der Titanoxydgehalt höher als 17 Masse-%, sinkt die Temperatur der Verbrennung des exothermen Gemisches stark, und sie wird weniger als die Schmelztemperatur der metallischen Grundmasse betragen, was zu einer schroffen Verminderung der Festigkeit der Haftung der verschleißfesten Oberfläche mit der metallischen Grundmasse führt.

Wenn das Chromoxyd in einer kleineren Menge, als es bei dem genannten Verhältnis vorgesehen ist, vorliegt, wird die verschleißfeste Oberfläche ihre Ganzheit einbüßen, weil die Verbrennungstemperatur bemerkbar sinkt und die Schmelze dazu nicht Kommt, über die Oberfläche der metallischen Grundmasse gleichmäßig verteilt zu werden, wobei sie in Form von einzelnen kleinen Inseln kristallisiert.

Falls die Menge des Chromoxydes vergrößert wird und 50 Masse-% übersteigt, wird die verschleißfeste Oberfläche mit Reinchrom gesättigt und sie büßt ihre Betriebseigenschaften ein.

Falls die Menge der Metalloxide der Eisengruppe unter der genannten Menge liegt, wird die verschleißfeste Oberfläche ihre Festigkeit und die Festigkeit der Haftung mit der metallischen Grundmasse infolge eines Mangels an Bindemittel einbüßen; wenn die Menge dieser Metalloxide der Eisengruppe die genannte Menge überschreitet, vermindert sich die Verschleißfestigkeit der Oberfläche.

Wenn der genannte Mengenbereich in bezug auf das Reduktionsmittel unter dem angemeldeten Bereich liegt, sinkt die Temperatur der Verbrennung des exothermen Gemisches, was zu den oben beschriebenen Nachteilen führt. Bei einem Reduktionsmittelgehalt,der die genannte Menge überschreitet, wird die verschleißfeste Oberfläche eine große Menge am Reduktionsmittel enthalten und ihre Härte und Verschleißfestigkeit einbüßen.

Bei einer Verminderung der Nichtmetallmenge von unter 0,01 Masse% büßt die verschleißfeste Oberfläche ihre Verschleißfestigkeit infolge eines Mangels en Karbiden, Boriden und/oder Siliziden in ihrem Bestand ein.

Andererseits führt das Vorhandensein des Nichtmetalls in einer Menge, die den angemeldeten Bereich überschreitet, dazu, daß der Werkstoff der verschleißfesten Oberfläche eine große Menge an einem freien Nichtmetall enthalten wird, das die Festigkeit der Haftung der verschleißfesten Oberfläche mit der metallischen Grundmasse vermindert.

Falls ein Mehrlagenerzeugnis hergestellt werden soll, das an einem kleinen Abschnitt der Oberfläche verschleißfest sein muß, wird eine solche Menge an dem exothermen Gemisch verwendet, daß das Verhältnis der Masse des exothermen Gemisches zu dem Flächeninhalt der metallischen Grundmasse, an welchem die verschleißfeste Oberfläche auszubilden ist, etwa 2 bis 40 zu 1 kg/cm² beträgt.

Wenn die Menge des exothermen Gemisches unter der genannten Menge liegt, wird die Herstellung einer verschleißfesten Oberfläche problematisch, weil am Wärmeaustausch die gesamte Oberfläche der metallischen Grundmasse beteiligt ist. Es wird eine sehr starke Wärmeabführung in die metallische Grundmasse erzeugt, und die Schmelze aus entstandenen hochschmelzenden Verbindungen kommt nicht dazu, über die Oberfläche der metallischen Grundmasse vor ihrer Kristallisation zu zerfließen. Dadurch werden die Ganzheit der verschleißfesten Oberfläche verletzt und die Qualität eines Mehrlagenerzeugnisses insgesamt verschlechtert.

Wenn die Menge des exothermen Gemisches die genannte Menge übersteigt, führt das zu einer Vergrößerung der Dicke der schmelzflüssigen Schicht aus Produkten, die bei der Verbrennung des exothermen Gemisches anfallen. Im Ergebnis kommen die gasförmigen Produkte der Verbrennung des exothermen Gemisches nicht dazu, die Schmelze vor deren Kristallisation zu verlassen, und sie bilden im Werkstoff der verschleißfestenOberfläche Poren und Lunker, welche die Festigkeit dieser Oberfläche vermindern.

Bei der Herstellung eines Mehrlagenerzeugnisses, bei dem der Flächeninhalt der verschleißfesten Oberfläche dem Flächeninhalt der gesamten metallischen Grundmasse gleich ist, wird das exotherme Gemisch in einer Menge genommen bei der das Verhältnis der Masse des Gemisches zu der Masse der metallischen Grundmasse etwa 0,1 bis 5 beträgt.

Es wurde experimentell nachgewiessen, daß eine solche Menge des exothermen Gemisches ausreicht, um ein Schmelzen der Decklage des Werkstoffes der metallischen Grundmasse und ein Vermischen der Produkte der Verbrennung des exothermen Gemisches mit der Schmelze zu verwirklichen.

Dadurch wird eine feste Haftung der verschleißfesten Oberfläche mit der metallischen Grundmasse ohne Verminderung der Härte und der Verschleißfestigkeit der herzustellenden Oberfläche gewährleistet.

Zur Erhöhung der Festigkeit der Haftung der verschleißfesten Oberfläche mit der metallischen Grundmasse wird die metallische Grundmasse vor der Entflammung des exothermen Gemisches auf eine Temperatur von etwa 0,2 bis etwa 0,8 der Schmelztemperatur derselben erwärmt.

In diesem Fall nimmt die Geschwindigkeit des Zerfliessens der Schmelze aus den Verbrennungsprodukten des exothermen Gemisches zu, wodurch die Bedingungen für das Vermischen der Schmelze der Decklage der metallischen Grundmasse mit der Schmelze aus den Verbrennungsprodukten des exothermen Gemisches verbessert werden.

Zur Herstellung von Mehrflagenerzeugnissen mit erhöhten Betriebseigenschaften wird in das exotherme Gemisch Kohlenstoff in einer Menge von etwa 20% bis etwa 40% von der stöchiometrischen Menge desselben zusätzlich eingeführt, wobei man als Gasmedium Luft verwendet.

Bei der Wärmebehandlung in der Atmosphäre von, z.B., Stickstoff oder Argon, sind in gasförmigen Verbrennungsprodukten bis zu 5 .% Kohlenoxid (CO) enthalten, d.h., im Werkstoff der verschleißfesten Oberfläche wird ein Kohlenstoffmangel erzeugt. Dieser Kohlenstoffmangel führt zu einer gewissenSenkung der Verschleißfestigkeit und der Härte der herzustellenden Oberfläche.

Außerdem wird durch die Gasabführung in die Atmosphäre diese mit Kohlenoxid verunreinigt.

Zum Ergänzen des Mangels an Kohlenstoff, der mit Sauerstoff unter Bildung von CO in Reaktion tritt, wird in das exotherme Gemisch ein Kohlenstoffüberschuß in einer Menge von etwa 20 bis etwa 40 % des stöchiometrischen Gehaltes im exothermen Gemisch eingeführt. Die Luft dient dazu, um das entstandene Kohlenoxid bis zu Kohlendioxid (CO₂) oxydieren zu lassen, das ökologisch nicht gefährlich ist und bei der Abführung in die Atmosphäre diese nicht verunreinigt.

Zu einer besseren Haftung der verschleißfesten Oberfläche mit der metallischen Grundmasse wird zwischen der zuletzt genannten und der Schicht des exothermen Gemisches ein Gemisch für die Ausbildung einer Zwischenlage untergebracht. Dieses Gemisch kann ein Pulver des Oxydes eines Metalls, das zur Zusammensetzung der metallischen Grundmasse gehört, mit einem Reduktionsmittel oder ein Pulver des Oxydes eines Metalls, das zur Zusammensetzung des exothermen Gemisches gehört, mit einem Reduktionsmittel, oder ein Pulver eines Metalls, das zur Zusammensetzung der metallischen Grundmasse gehört, und/oder ein Pulver eines Metalls, das zur Zusammensetzung des exothermen Gemisches gehört, enthalten.

Das Vorhandensein einer Zwischenlage gestattet es, die Festigkeit der Haftung der verschleißfesten Oberfläche mit der metallischen Grundmasse zu erhöhen.

Im Ergebnis der Verwendung der genannten Komponenten des Gemisches für die Ausbildung der Zwischenlage, bildet sich während der Verbrennung dieses Gemisches eine Schmelze eines Metalls, das zur Zusammensetzung des Gemisches für die Ausbildung der Zwischenlage gehört, welche die Rolle einer Bindung spielt; indem sich diese Zwischenlage mit der Schmelze aus den Verbrennungsprodukten des exothermen Gemisches und mit der Schmelze aus der Decklage der metallischen Grundmasse vermischt und kristallisiert, bildet sie eine Übergangszone, welche eine zügige Änderung der thermischen Eigenschaften von der verschleißfesten Oberfläche bis zur metallischen Grundmassedes Erzeugnisses gewährleistet.

Der Werkstoff dieser Zone hat einen Wärmeausdehnungskoeffizienten, der ein Mittelwert zwischen dem Wärmeausdehnungskoeffizienten der metallischen Grundmasse und dem Wärmeausdehnungskoeffizienten der verschleißfesten Oberfläche darstellt. Deshalb kann der Werkstoff dieser Zone Spannungen aushalten, die bei der Erstarrung der metallischen Grundmasse einerseits und der verschleißfesten Oberfläche andererseits entstehen, indem er eine feste Haftung derselben gewährleistet.

Es wurde experimentell nachgewiesen, daß sich bei einem Verhältnis der Masse des Gemisches für die Ausbildung der Zwischenlage zu der Masse des exothermen Gemisches von etwa 1 k bis zu etwa 2,5 bis 25 eine bessere Haftung der verschleißfesten Oberflache mit der metallischen Grundmasse vollzieht.

Bei einer Vergrößerung oder einer Verminderung des genannten Verhältnisses ist keine Verbesserung der Haftung der verschleißfesten Oberflache mit der metallischen Grundmasse zu verzeichnen; dabei verschlechtern sich die Verschleißfestigkeit und die Härte der verschleißfesten Oberfläche.

Zur Herstellung einer verschleißfesten Oberfläche an einem kleinen Abschnitt der Oberfläche eines Mehrlagenerzeugnisses wird auf die Schicht des exothermen Gemisches ein Gemisch aus Molybdän- und Magnesiumoxyd zur Erzeugung einer entflammbaren Schicht aufgebracht.

Das genannte Gemisch hat eine hohe Verbrennungsgeschwindigkeit; deshalb wird von diesem Gemisch praktisch gleichzeitig das gesamte exotherme Gemisch auf einmal entflammt.

Anschließend wird eine Verbrennungsfront parallel zu der Ebene der metallischen Grundmasse ausgebildet. Indem sich die Verbrennungsfront in Richtung der metallischen Grundmasse fortpflanzt erreicht sie diese an allen Punkten gleichzeitig. Es vollzieht sich ein gleichmäßiges Vermischen der Verbrennungsprodukte des exothermen Gemisches mit den Verbrennungsprodukten der Decklage der metallischen Grundmasse, was zu einer besseren Haftung der metallischen Grundmasse mit der verschleißfesten Oberfläche führt.

Zu einem besseren Verständnis der Erfindung werden nachstehend konkrete Durchführungsbeispiele derselben angeführt. Die Haftfestigkeitswerte der verschleißfesten Oberfläche mit der metallischen Grundmasse sind in der Tabelle 1 angeführt, die die konkreten Durchführungsbeispiele des erfindungsgemäßen Verfahrens schließt.

Beispiel 1

Nach einem beliebigen bekannten Verfahren wird ein exothermes Gemisch aufbereitet, das enthält, masse-%:

| | |
|---|---|
| Kohlenstoff | 2,94 |
| Molybdänoxyd | 70,60 |
| Aluminium | 26,46 |

Das aufbereitete exotherme Gemisch wird in einer Menge von 0,01 kg auf die Oberfläche einer metallischen Grundmasse mit einem Gewicht von 0,1 kg aufgebracht.

Als metallische Grundmasse wird Stahl gewählt, der enthält, Masse-%:

| | |
|---|---|
| Chrom | 10 bis 20 |
| Nickel | 9 bis 20 |
| Titan | 0,5 bis 10 |
| Kohlenstoff | 0,05 bis 0,1 |
| Eisen | Rest |

Dieser Stahl hat eine Schmelztemperatur von etwa 1500° C.

Der hergestellte Rohling wird in einer Wärmebehandlungszone untergebracht, in der ein Druck eines Gasmediums von 100 atm erzeugt wird. Als Gasmedium wird Stickstoff verwendet.

Dann wird eine lokale Entflammung des exothermen Gemisches dadurch verwirklicht, daß man einer Wolframspirale, welche mit dem exothermen Gemisch in Berührung steht, eine Spannung zuführt.

Die Wärmebehandlung wird unter Bedingungen der Flammenführung bei einer Temperatur von 3900° C durchgeführt die um das 2,6fache die Schmelztemperatur der genannten metallischen Grundmasse übersteigt.

Die Wärmeabführung wird dadurch verwirklicht, daß man die genannte Menge des exothermen Gemisches unter Entwicklung einer Wärmemenge verbrennen läßt, die für das Schmelzenlediglich der Decklage der metallischen Grundmasse mit dem genannten Gewicht ausreicht.

Nach der Beendigung der Verbrennungsreaktion findet eine Kristallisation der Schmelze statt.

Der Druck wird abgebaut und der Rohling wird bis zur Herstellung des Zielerzeugnisses abgekühlt.

Visuell gesehen stellt das hergestellte Erzeugnis ein Dreilagen-Sandwich dar. Die untere Lage dieses Sandwiches bildet die metallische Grundmasse, die mittlere Lage- die verschleißfeste Oberfläche und die Decklage - das Oxyd eines Reduktionsmittels.

Das Oxid des Reduktionsmittels hat keine Haftung mit der verschleißfesten Oberfläche und läßt sich mechanisch leicht entfernen.

Die Haftfestigkeitswerte der verschleißfesten Oberfläche mit der metallischen Grundmasse sind in der Tabelle 2 zusammengefaßt, die der Tabelle 1 folgt.

Beispiel 2

Nach einem beliebigen bekannten Verfahren wird ein exothermes Gemisch aufbereitet, das enthält, Masse-%:

| | |
|---|---|
| Molybdänoxyd | 27,3 |
| Titanoxyd | 27,4 |
| Kohlenstoff | 5,3 |
| Aluminium | 30,1 |
| Nickeloxyd | 5,9 |
| Magnesium | 4. |

Das aufbereitete exotherme Gemisch wird in einer Menge von 0,5 kg auf die Oberfläche einer metallischen Grundmasse mit einem Gewicht von 0,1 kg aufgebracht.

Als metallische Grundmasse verwendet man einen Stahl, der enthält, Masse-%:

12

| Kohlenstoff | 0,20 bis 0,45 |
| Chrom | 1,20 bis 1,40 |
| Mangan | 1,20 bis 4,40 |
| Silizium | 1,20 bis 1,40 |
| Eisen | Rest |

Der genannte Stahl hat eine Schmelztemperatur von etwa 1500°C. Der hergestellt Rohling wird in einer Wärmebehandlungszoneuntergebracht, in der ein Druck eines Gasmediums von 1 atm erzeugt wird.

Als Gasmedium verwendet man Stickstoff.

Dann wird nach einem beliebigen bekannten Verfahren eine Entflammung des exothermen Gemisches ausgelöst, wonach dessen Komponenten unter Bedingungen der Flammenführung bei einer Temperatur von 3150°C miteinander reagieren, die um das 2,1fache die Schmelztemperatur der genannten metallischen Grundmasse übersteigt.

Die Wärme wird durch Berührung der metallischen Grundmasse mit einem Kupferblock abgeführt, der eine Wärmeabführung auf sich in solch einer Menge gewährleistet, daß bei der Verbrennung des exothermen Gemisches lediglich die Decklage der metallischen Grundmasse schmilzt.

Nach der Beendigung der Verbrennungsreaktion und der Kristallisation der Schmelze wird der Rohling bis zur Herstellung des Zielerzeugnissen abgekühlt.

Das hergestellte Erzeugnis stellt ein Dreilagen- Sandwich dar, dessen untere Lage von der metallischen Grundmasse, die mittlere Lage - von der verschleißfesten Oberfläche und die Decklage- von dem Oxyd eines Reduktionsmittels gebildet werden.

Das Oxyd des Reduktionsmittels weist keine Haftung mit der verschleißfesten Oberfläche auf und läßt sich mechanisch leicht entfernen.

Die Haftfestigkeitswerte der verschleißfesten Oberfläche mit der metallischen Grundmasse sind in der Tabelle 2 angeführt.

Beispiel 3

Man bereitet ein exothermes Gemisch auf, das enthält,

| Masse-%: | |
| Kohlenstoff | 1,40 |
| Titanoxyd | 9,37 |
| Eisenoxyd | 68,03 |
| Aluminium | 21,20 |

Das aufbereitete exotherme Gemisch wird in einer Menge von 0,15 kg auf die Oberfläche einer metallischen Grundmasse aufgebracht, die ein Gewicht von 0,1 kg hat.

Als metallische Grundmasse verwendet man einen Stahl, der enthält, Masse-%:

| Kohlenstoff | 0,20 bis 0,45 |
| Chrom | 1,20 bis 1,40 |
| Eisen | Rest |

Der genannte Stahl hat eine Schmelztemperatur von etwa 1500°C.

Der hergestellte Rohling wird in einer Wärmebehandlungszone untergebracht, in der ein Druck eines Gasmediums von 50 atm erzeugt wird. Als Gasmedium verwendet man Stickstoff.

Dann wird nach einem beliebigen bekannten Verfahren eine Entflammung des exothermen Gemisches ausgelöst, dessen Komponenten anschließend unter Bedingungen der Flammenführung miteinander reagieren.

Die Wärmebehandlung wird unter Bedingungen der Flammenführung bei einer Temperatur von etwa 2400°C durchgeführt, die um das 1,6fache die Schmelztemperatur der genannten metallischen Grundmasse übersteigt.

Die Wärmeabführung wird durch Berührung der metallischen Grundmasse mit dem Pulver eines leichtschmelzenden Metalls, z.B., Zinn, vorgenommen, das beim Schmelzen eine große Wärmemenge auf sich abführt und dabei ein Schmelzen lediglich der Decklage der metallischen Grundmasse gewährleistet.

Nach der Beendigung der Verbrennung und der Kristallisation der Schmelze wird der Druck abgebaut und der Rohling wird bis zur Herstellung des Zielerzeugnisses abgekühlt.

Die Haftfestigkeitswerte der verschleißfesten Oberfläche mit der metallischen Grundmasse sind in der Tabelle 2 zusammengefaßt.

Beispiel 4

Man bereitet ein exothermes Gemisch auf, das enthält,

| Masse-%: | |
|---|---|
| Kohlenstoff | 5,3 |
| Aluminium | 35,2 |
| Boroxyd | 1,8 |
| Titanoxyd | 27,4 |
| Molybdänoxyd | 30,3 |

Das aufbereitete exotherme Gemisch wird in einer Menge von 0,024 kg auf einen Abschnitt der Oberfläche einer metallischen Grundmasse aufgebracht, der eine Fläche von 12 cm² hat. Das entspricht 2g/cm².

Als metallische Grundmasse verwendet man ein Roheisen, das enthält, Masse-%:

| Kohlenstoff | 2,4 bis 2,9 |
|---|---|
| Silizium | 1,0 bis 1,6 |
| Mangan | 0,2 bis 1,0 |
| Eisen | Rest |

Das genannte Roheisen hat eine Schmelztemperatur von etwa 1,500°C.

Der hergestellte Rohling wird in einer Wärmebehandlungszone untergebracht. In der Wärmebehandlungszone wird ein Druck von etwa 40 atm erzeugt, und nach einem beliebigen bekannten Verfahren wird eine Entflammung des exothermen Gemisches ausgelöst, wonach die Komponenten dieses Gemisches miteinander unter Bedingungen der Flammenführung reagieren.

Die Wärmebehandlung wird bei einer Temperatur von 3000°C durchgeführt, die um das 2fache die Schmelztemperatur der genannten metallischen Grundmasse übersteigt.

Die Wärmeabführung geschieht ähnlich wie im Beispiel 1.

Nach der Vollendung der Kristallisation wird eine Druckentspannung vorgenommen, und der hergestellte Rohling wird bis zur Herstellung des Zielerzeugnisses angekühlt.

Die Kennwerte der Haftung der verschleißfesten Oberfläche mit der metallischen Grundmasse sind in der Tabelle 2 zusammengefaßt.

Beispiel 5

Nach einem beliebigen bekannten Verfahren bereitet man ein exothermes Gemisch auf, das enthält, Masse-%:

| | |
|---|---|
| Kohlenstoff | 3,2 |
| Zirkonium | 47,7 |
| Titanoxyd | 11,6 |
| Molybdänoxyd | 37,5. |

Das hergestellte exotherme Gemisch wird in einer Menge von 0,12 kg auf einen Abschnitt der Oberfläche einer metallischen Grundmasse aufgebracht, der eine Fläche von 12 cm²hat. Das entspricht 10 g/cm².

Die metallische Grundmasse enthält, Masse-%: Chrom-74,5; Bor-15,9; Kupfer - 9,6, und hat eine Schmelztemperatur von etwa 2000° C.

Der hergestellte Rohling wird in einer Wärmebehandlungszone untergebracht, in der ein Druck eines Gasmediums von 50 atm erzeugt wird. Als Gasmedium verwendet man Stickstoff.

Die Wärmebehandlung erfolgt ähnlich wie im Beispiel 4 bei einer Temperatur von 3500° C, die um das 1,75fache die Schmelztemperatur der metallischen Grundmasse übersteigt. Die Wärmeabführung wird ähnlich wie im Beispiel 1 durchgeführt.

Die Kenwerte der Haftung der verschleißfesten Oberfläche mit der metallischen Grundmasse sind in der Tabelle 2 angeführt.

Beispiel 6

Man bereitet ein exothermes Gemisch auf, das enthält, Masse-%:

| | |
|---|---|
| Bor | 3,2 |
| Magnesium | 31,7 |
| Molybdänoxyd | 65,1 |

Das aufbereitete exotherme Gemisch wird in einer Menge von 0,48 kg auf einen Abschnitt der Oberfläche einer metallischen Grundmasse aufgebracht, der eine Fläche von 12 cm² hat. Das entspricht 40 g/cm². Dann wird das Verfahren ähnlich wie im Beispiel 2 durchgeführt. Die Wärmeabführung wird ähnlich wie im Beispiel 2 vorgenommen.

Die Haftfestigkeitswerte der verschleißfesten Oberfläche mit der metallischen Grundmasse sind in der Tabelle 2 zusammengefaßt.

Beispiel 7

Man bereitet ein exothermes Gemisch auf, das enthält, Masse-%:

| | |
|---|---|
| Silizium | 3,15 |
| Kohlenstoff | 4,95 |
| Aluminium | 30,4 |
| Vanadinoxyd | 61,5 |

Das aufbereitete exotherme Gemisch wird in einer Menge von 0,5 kg auf eine metallische Grundmasse mit einem Gewicht von 0,1 kg aufgebracht.

Als metallische Grundmasse verwendet man einen Stahl, der enthält, Masse-%:

15

| Kohlenstoff | 1,0 bis 1,2 |
| Mangan | 10 bis 13 |
| Eisen | Rest |

Der genannte Stahl hat eine Schmelztemperatur von 1500° C.

Der hergestellte Rohling wird in einer Wärmebehandlungszone untergebracht, in der ein Druck eines Gasmediums von 30 atm erzeugt wird.

Die metallische Grundmasse wird nach einem beliebigen bekannten Verfahren auf eine Temperatur von 300° C erwärmt, was 0,2 der Schmelztemperatur dieser metallischen Grundmasse beträgt.

Des weiteren wird das Verfahren ähnlich dem im Beispiel 1 beschriebenen Verfahren durchgeführt.

Die Haftfestigkeitswerte der verschleißfesten Oberfläche mit der metallischen Grundmasse sind in der Tabelle 2 zusammengefaßt.

Beispiel 8

Nach einem beliebigen bekannten Verfahren wird ein exothermes Gemisch aufbereitet, das enthält, Masse-%:

| Kohlenstoff | 3 |
| Titan | 32,6 |
| Nickeloxyd | 64,4 |

Das aufbereitete exotherme Gemisch wird in einer Menge von 0,01 kg auf eine metallische Grundmasse mit einem Gewicht von 0,1 kg aufgebracht.

Als metallische Grundmasse verwendet man ein Roheisen, das enthält, Masse-%:

| Kohlenstoff | 3,0 bis 3,6 |
| Silizium | 1,1 bis 2,9 |
| Mangan | 0,3 bis 0,7 |
| Eisen | Rest |

Das genannte Roheisen hat eine Schmelztemperatur von etwa 1500° C.

Der hergestellte Rohling wird in einer Wärmebehandlungszone untergebracht, in der ein Druck eines Gasmediums von 20 atm erzeugt wird.

Als Gasmedium verwendet man Argon.

Die metallische Grundmasse wird nach einem beliebigen bekannten Verfahren auf eine Temperatur von 1200° C erwärmt, was 0,8 der Schmelztemperatur dieser Grundmasse ausmacht. Des weiteren wird das Verfahren ähnlich dem im Beispiel 4 beschriebenen Verfahren durchgeführt.

Die Haftfestigkeitswerte der verschleißfesten Oberfläche mit der metallischen Grundmasse sind in der Tabelle 2 zusammengefaßt.

Beispiel 9

Man bereitet ein exothermes Gemisch auf, das enthält, Masse-%:

| Kohlenstoff | 7,9 |
| Aluminium | 30,6 |
| Vanadinoxyd | 59,5 |
| Siliziumoxyd | 2,0 |

16

Das aufbereitete exotherme Gemisch wird in einer Menge von 0,2 kg auf die Oberfläche einer metallischen Grundmasse mit einem Gewicht von 0,1 aufgetragen.

Als metallische Grundmasse verwendet man ein Roheisen mit einer Zusammensetzung wie im Beispiel 4 und einer Schmelztemperatur von etwa 1500°C.

Der hergestellte Rohling, wird in einer Wärmebehandlungszone untergebracht. In der Wärmebehandlungszone wird ein Druck eines Gasmediums von 10 atm erzeugt.

Die metallische Grundmasse wird auf eine Temperatur von 750°C erwärmt, was 0,5 der Schmelztemperatur dieser Grundmasse ausmacht.

Des weiteren wird das Verfahren ähnlich dem im Beispiel 4 beschriebenen Verfahren durchgeführt. Die Haftfestigkeitswerte der verschleißfesten Oberfläche mit der metallischen Grundmasse sind in der Tabelle 2 angeführt.

Beispiel 10.

Man bereitet ein exothermes Gemisch auf, das enthält, Masse-%:

Kohlenstoff                      2,94

Aluminium                       26,46

Molybdänoxyd                    70,60

In das aufbereitete exotherme Gemisch werden zusätzlich 0,56 g Kohlenstoff eingeführt, was 20% von der stöchiometrischen Menge desselben ausmacht.

Das aufbereitete exotherme Gemisch wird in einer Menge von 0,05 g auf die Oberfläche einer metallischen Grundmasse aufgebracht, die ein Gewicht von 0,1 kg hat. Als metallische Grundmasse verwendet man einen Stahl mit einer Zusammensetzung wie im Beispiel 2.

Der hergestellte Rohling wird in einer Wärmebehandlungszone untergebracht.

In der Wärmebehandlungszone wird ein Druck eines Gasmediums von 100 atm erzeugt. Als Gasmedium verwendet man Luft.

Des weiteren wird das Verfahren ähnlich dem im Beispiel 1 beschriebenen Verfahren durchgeführt.

In den gasförmigen Verbrennungsprodukten konnten 2 % Kohlendioxyd ($CO_2$) nachgewiesen werden; Kohlenmonoxyd (CO) konnte nicht festgestellt werden.

Die Haftfestigkeitswerte der verschleißfesten Oberfläche mit der metallischen Grundmasse sind in der Tabelle 2 angeführt.

Beispiel 11

In ein wie im Beispiel 10 aufbereitetes exothermes Gemisch werden 1,17 g Kohlenstoff zusätzlich eingeführt, was 40 % von seiner stöchiometrischen Menge ausmacht.

Des weiteren wird das Verfahren ähnlich dem im Beispiel 10 beschriebenen Verfahren durchgeführt.

In gasförmigen Verbrennungsprodukten wurden 3 % Kohlendioxyd ($CO_2$) nachgewiesen; Kohlenmonooxyd (CO) konnte nicht festgestellt werden.

Die Haftfestigkeitswerte der verschleißfesten Oberfläche mit der metallischen Grundmasse sind in der Tabelle 2 angeführt.

Beispiel 12

In ein wie im Beispiel 10 aufbereitetes exothermes Gemisch werden 0,88 g Kohlenstoff zusätzlich eingeführt, was 30% von seiner stöchiometrischen Menge ausmacht.

Des weiteren wird das Verfahren wie im Beispiel 10 bei einem Luftdruck von 20 atm durchgeführt.

In gasförmigen Verbrennungsprodukten wurden 2,5 % Kohlendioxyd ($CO_2$) nachgeweisen; es wurde kein Kohlenmonoxyd (CO) festgestellt.

Die Haftfestigkeitswerte der verschleißfesten Oberfläche mit der metallischen Grundmasse sind in der Tabelle 2 angeführt.

Beispiel 13.

Man bereitet ein exothermes Gemisch auf, das dem in Beispiel 2 beschriebenen Gemisch ähnlich ist.

Auf die Oberflache einer metallischen Grundmasse mit einem Gewicht von 0,1 kg werden 0,005 kg eines Gemisches für die Ausbildung einer Zwischenlage aufgetragen, welches Gemisch enthält, Masse-%:

| Titanoxyd | 69 |
| Aluminium | 31 |

Des weiteren wird auf die Oberfläche dieses Gemisches das exotherme Gemisch in einer Menge von 0,05 kg aufgebracht. Das Verhältnis der Massen der genannten Lagen zueinander beträgt 1:10. Die Wärmeabführung wird wie im Beispiel 1 vorgenommen.

Des weiteren wird das Verfahren wie im Beispiel 2 durchgeführt.

Die Haftfestigkeitswerte der verschleißfesten Oberfläche mit der metallischen Grundmasse sind in der Tabelle 2 angeführt.

Beispiel 14

Man bereitet ein exothermes Gemisch ähnlich wie im Beispiel 2 auf.

Auf die Oberfläche einer metallischen Grundmasse mit einem Gewicht von 0,1 kg werden 0,025 kg eines Gemisches für die Ausbildung einer Zwischenlage aufgebracht, das enthält,

| Eisenoxyd | 80 |
| Aluminium | 20 |

Dann wird auf die Oberfläche dieses Gemisches das exotherme Gemisch in einer Menge von 0,062 kg aufgetragen. Das Verhältnis der Massen der genannten Lagen zueinander beträgt 1:2,5.

Des weiteren wird das Verfahren wie in Beispiel 1 durchgeführt.

Die Haftfestigkeitswerte der verschleißfesten Oberfläche mit der metallischen Grundmasse sind in Tabelle 2 angeführt, wobei als metallische Grundmasse ein Stahl mit einer Zusammensetzung wie im Beispiel 2 verwendet wird.

Beispiel 15

Das Verfahren wird wie im Beispiel 14 durchgeführt. Als Gemisch für die Ausbildung einer Zwischenlage verwendet man jedoch Titanpulver in einer Menge von 0,0025 kg. Das Verhältnis der Massen der Zwischenlage und der Lage des exothermen Gemisches zueinander beträgt 1:25.

Die Haftfestigkeitswerte der verschleißfesten Oberfläche mit der metallischen Grundmasse sind in der Tabelle 2 angeführt.

Beispiel 16

Das Verfahren wird wie im Beispiel 14 durchgeführt. Als Gemisch für die Ausbildung einer Zwischenlage verwendet man jedoch Eisenpulver in einer Menge von 0,003 kg.

Das Verhältnis der Masse der Zwischenlage zu der Masse des exothermen Gemisches beträgt etwa 1 : 20.

Die Haftfestigkeitswerte der verschleißfesten Oberfläche mit der metallischen Grundmasse sind in der Tabelle 2 angeführt.

18

Beispiel 17

Man bereitet ein exothermes Gemisch auf, das enthält, Masse-%:

| | |
|---|---|
| Kohlenstoff | 5 |
| Aluminium | 30 |
| Titanoxyd | 9 |
| Chromoxyd | 50 |
| Nickeloxyd | 6 |

Auf die Oberfläche einer metallischen Grundmasse, die eine Schmelztemperatur von etwa 1500° C und ein Gewicht von 0,1 kg hat, werden aufeinanderfolgend ein Gemisch für die Ausbildung einer Zwischenlage in einer Menge von 0,026 kg und das genannte exotherme Gemisch in einer Menge von 0,065 aufgebracht.

Als Gemisch für die Ausbildung der Zwischenlage verwendet man ein Gemisch, das enthält, Masse-%:

| | |
|---|---|
| Aluminium | 20 |
| Eisenoxyd | 80 |

Das Verhältnis der Masse des Gemisches für die Ausbildung der Zwischenlage zu der Masse des exothermen Gemisches beträgt etwa 1:2,5.

Der hergestellte Rohling wird in einer Wärmebehandlungszone untergebracht.

In der Wärmebehandlungszone wird ein Druck von Argon in Höhe von 100 atm erzeugt, und es wird eine lokale Entflammung des exothermen Gemisches mit anschließendem Reagieren der Komponenten des exothermen Gemisches und des Gemisches für die Ausbildung der Zwischenlage unter Bedingungen der Flammenführung ausgelöst.

Die Wärmebehandlung wird bei einer Temperatur von 3900° C durchgeführt, die um das 2,6fache die Schmelztemperatur der metallischen Grundmasse übersteigt, wobei als metallische Grundmasse ein Stahl mit einer Zusammensetzung wie im Beispiel 2 verwendet wird. Nach der Vollendung der Verbrennungsreaktion und der Kristallisation der Schmelze wird der Druck angebaut, und der Rohling wird bis zur Herstellung des Zielerzeugnisses abgekühlt. Die Wärmeabführung erfolgt wie im Beispiel 1.

Die Haftfestigkeitswerte der verschleißfesten Oberfläche mit der metallischen Grundmasse sind in der Tabelle 2 angeführt.

Beispiel 18

Man bereitet nach einem beliebigen bekannten Verfahren ein exothermes Gemisch auf, das enthält, Masse-%:

| | |
|---|---|
| Kohlenstoff | 4 |
| Aluminium | 30 |
| Eisenoxyd | 25 |
| Nickeloxyd | 10 |
| Chromoxyd | 25 |
| Titanoxyd | 6 |

In das genannte Gemisch wurde Kohlenstoff in einer Menge eingeführt, die seine stöchiometrische Menge um 40 % übersteigt.

Auf die Oberfläche einer metallischen Grundmasse, die ein Gewicht von 0,1 kg und eine Schmelztemperatur von etwa 1500° C hat, wurden aufeinanderfolgend 0,015 kg Eisenpulver, das als Gemisch für die Ausbildung einer Zwischenlage verwendet wird, und das genannte exotherme Gemisch in einer Menge von 0,3 kg aufgebracht.

Das Verhältnis der Masse des exothermen Gemisches zu der Masse der metallischen Grundmasse beträgt etwa 3 : 1, das Verhältnis der Masse des Gemisches für die Ausbildung der Zwischenlage zu der Masse des exothermen Gemisches beträgt etwa 1 : 20.

Der hergestellte Rohling wird in einer Wärmebehandlungszone untergebracht. Die metallische Grundmasse wird auf eine Temperatur von 300° C erwärmt, was 0,2 ihrer Schmelztemperatur beträgt.

Dann wird eine Entflammung des exothermen Gemisches bei einem Luftdruck von 1 atm vorgenommen.

Die Wärmebehandlung wird bei einer Temperatur von 2400 ° C durchgeführt, die um das 1,6fache die Schmelztemperatur der metallischen Grundmasse übersteigt; als metallische Grundmasse verwendet man einen Stahl, der eine Zusammensetzung ähnlich dem Beispiel 2 hat.

Die Haftfestigkeitswerte der verschleißfesten Oberfläche mit der metallischen Grundmasse sind in der Tabelle 2 angeführt.

Beispiele 19 bis 29.

Das Verfahren zur Herstellung von Mehrlagenerzeugnissen wird gemäß den genannten Beispielen ähnlich dem im Beispiel 1 beschriebenen Verfahren durchgeführt.

Einen Unterschied bilden dabei Zusammensetzungen des exothermen Gemisches, die zu erzeugenden Druckwerte des Gasmediums, Verbrennungstemperaturen des exothermen Gemisches und Schmelztemperaturen der metallischen Grundmasse sowie Verhältnisse der Masse des exothermen Gemisches und der Masse der metallischen Grundmasse zueinander.

Angaben über diese Beispiele sind in der Tabelle 1 angeführt.

Die Haftfestigkeitswerte der verschleißfesten Oberfläche mit der metallischen Grundmasse sind in der Tabelle 2 angeführt.

Beispiel 30

Man bereitet ein exothermes Gemisch auf, das enthält, Masse-%:

| | |
|---|---|
| Kohlenstoff | 1,40 |
| Aluminium | 21,20 |
| Titanoxyd | 9,37 |
| Eisenoxyd | 68,03 |

Das Verfahren wird ähnlich dem im Beispiel 2 beschriebenen Verfahren durchgeführt.

Ein Unterschied besteht dabei darin, daß auf die Oberfläche des exothermen Gemisches ein Gemisch aus Molybdänoxyd und Magnesium zur Herstellung einer entflammbaren Schicht mit einem Gewicht von 0,01 kg aufgebracht wird.

Die Haftfestigkeitswerte der verschleißfesten Oberfläche mit der metallischen Grundmasse sind in der Tabelle 2 zusammengefaßt.

Beispiel 31 (Vergleichsbeispiel)

Auf die Stahlgrundmasse eines Erzeugnisses wird eine Schicht aus einem Bindemetall aufgebracht, wobei als Bindemetall Kupfer verwendet wird.

Auf die Kupferschicht wird eine Schicht aus einer Hartlegierung einer Wolframkarbidlegierung - aufgepreßt. Auf die Wolframkarbidschicht wird eine Schicht aus einem Zementierungsmetall-Kupfer-aufgebracht.

Der hergestellte Rohling wird in einer Heizvorrichtung untergebracht, welche die Erzeugung einer hohen Temperatur ermöglicht. Es wird ein Zustrom von einem Inertgas erzeugt, und der hergestellte Rohling wird bis auf die Schmelztemperatur des Kupfers erwärmt.

Das Kupfer schmilzt und zerfließt über die Poren der Hartlegierungsschicht. Nach dem Erstarren wird die Hartlegierung durch Kupfer zementiert. Die inerte Atmosphäre verhindert bei dem vorliegenden Verfahren eine Oxydation des flüssigen Kupfers mit Luftsauerstoff.

Die Haftfestigkeitswerte der verschleißfesten Oberfläche mit der metallischen Grundmasse sind in der Tabelle 2 zusammengefaßt.

Die Haftfestigkeit der verschleißfesten Oberfläche mit der metallischen Grundmasse wird mit Hilfe eines Gerätes "Instron" ermittelt.


Industrielle Anwendbarkeit

Besonders wirksam kann die vorliegende Erfindung zur Herstellung von flachen Mehrlagenerzeugnissen mit einer verschleißfesten Oberfläche aus Hartlegierungen auf der Basis von hochschmelzenden Metallverbindungen verwendet werden, die im Hüttenwesen, im Bergbau, in der Landwirtschaft und im Maschinenbau ihre Anwendung finden können.

Tabelle 1

| Zusammensetzung des exothermen Gemisches | | | | | |
|---|---|---|---|---|---|
| Lfd. Nrn. | Nichtmetall, Masse-% | Reduktionsmittel, Masse-% | Titanoxyd, Masse-% | Eisen- und/oder Nickel, und/oder Kobaltoxyd, Masse-% | Cromoxyd Masse-% |
| 1 | 2 | 3 | 4 | 5 | 6 |
| 19 | Kohlenstoff-2 Bor- 4 Silizium -1 | Aluminium-29 Zirkonium - 1 | 6 | 32 | 25 |
| 20 | Kohlenstoff-3,5 Boroxyd - 1,5 | Aluminium - 29 | 9 | 7 | 50 |
| 21 | Bor - 2 | Aluminium - 24 | 17 | 10 | 47 |
| 22 | Kohlenstoff - 4 Siliziumoxyd - 2 | Magnesium - 23 | 4 | 32 | 35 |
| 23 | Siliziumoxyd - 2 | Aluminium-28 | 5 | 35 | 30 |
| 24 | Boroxyd - 5 | Aluminium - 24 Magnesium - 6 | 8 | 9 | 48 |
| 25 | Silizium - 1 | Aluminium - 28 Titan - 3 | 5 | 34 | 32 |
| 26 | Kohlenstoff - 2 Bor - 5 | Aluminium - 28 Zirkonium - 3 | 12 | 10 | 40 |

Tabelle 1 (Fortsetzung)

| 1 | 2 | 3 | 4 | 5 | 6 |
|---|---|---|---|---|---|
| 27 | Kohlenstoff – 3 | Aluminium – 22 | 9 | 25 | 41 |
| 28 | Kohlenstoff – 6 | Aluminium – 32 | 11 | 14 | 37 |
| 29 | Kohlenstoff–0,01 | Aluminium – 25 | | | |
| | | Titan – 2 | 9 | 35,99 | 28 |

Tabelle 1 (Fortsetzung

| Druck, atm | $T_1$ –Verbrennungstemperatur des exothermen Gemisches, $0\,^{o}C$ | $T_2$ Schmelztemperatur der metallischen Grundmasse, $^{o}C$ | $\dfrac{T_1}{T_2}$ | Verhältnis der Masse des exothermen Gemisches zu der Masse der metallischen Grundmasse Gemisch/M Grundmasse |
|---|---|---|---|---|
| 7 | 8 | 9 | 10 | 11 |
| 1 | 2400 | 1500 | 1/6 | 5 |
| 100 | 3900 | 1500 | 2,6 | 0,1 |
| 100 | 3600 | 1800 | 2 | 0,5 |
| 60 | 3100 | 1960 | 1,59 | 0,5 |
| 10 | 2600 | 1000 | 2,6 | 1 |
| 50 | 3600 | 1600 | 2,25 | 0,5 |
| 60 | 3000 | 1500 | 2 | 3 |
| 30 | 2800 | 1500 | 1,86 | 1 |
| 30 | 3000 | 1400 | 2,1 | 0,8 |
| 20 | 2600 | 1500 | 1,7 | 2 |
| 1 | 2400 | 1000 | 2,4 | 5 |

Tabelle 2

| Nr. des Beispiels | Verfahren zur Herstellung eines Mehrlagenerzeugnisses | Trennkraft, kg/mm² | Haftfestigkeitswerte |
|---|---|---|---|
| 1 | 2 | 3 | 4 |
| 1 | Erfindungsgemäß | 8 | löste sich nicht ab |
| 2 | _"_ | 10 | - " - |
| 3 | _"_ | 20 | - " - |
| 4 | _"_ | 10 | _"_ - |
| 5 | _"_ | 10 | - " - |
| 6 | _"__ | 8 | - " - |
| 7 | _"_ | 8 | - " - |
| 8 | _"_ | 10 | - " - |
| 9 | _"_ | 10 | - " - |
| 10 | _"_ | 8 | - " - |
| 11 | _"_ | 8 | - " - |
| 12 | _"_ | 8 | - " - |
| 13 | _"_ | 10 | - " - |
| 14 | _"_ | 20 | - " - |
| 15 | _"_ | 10 | - " - |
| 16 | _"_ | 10 | - " - |
| 17 | _"_ | 20 | - " - |
| 18 | _"_ | 10 | - " - |
| 19 | _"_ | 20 | - " - |
| 20 | _"_ | 15 | - " - |
| 21 | _"_ | 15 | - " - |
| 22 | _"_ | 15 | - " - |
| 23 | _"_ | 15 | - " - |
| 24 | _"_ | 20 | - " - |
| 25 | _"_ | 20 | - " - |
| 26 | _"_ | 15 | - " - |
| 27 | _"_ | 20 | - " - |
| 28 | _"_ | 15 | - " - |
| 29 | _"_ | 15 | - " - |
| 30 | _"_ | 15 | - " - |
| 31 | Prototyp | 4 | - " - |

**Ansprüche**

1. Verfahren zur Herstellung eines Mehrlagenerzeugnisses mit einer verschleißfesten Oberfläche, welches darin besteht, daß man auf die metallische Grundmasse eines Rohlings eines Erzeugnisses ein Gemisch für die Ausbildung einer verschleißfesten Oberfläche aufbringt und den erhaltenen Rohling in einer Wärmebehandlungszone unterbringt, wo dieser einer Wärmebehandlung ausgesetzt wird, wonach der Rohling bis zur Herstellung des Zielerzeugnisses abgekühlt wird, dadurch gekennzeichnet, daß man als Gemisch für die Ausbildung der verschleißfesten Oberfläche ein exothermes Gemisch, enthaltend ein Pulver des Oxydes mindestens eines Metalls, ein Pulver eines Reduktionsmittels, das aus der Aluminium, Magnesium, Titan, Zirkonium enthaltenen Gruppe gewählt wurde, welche im einzelnen oder in Kombination genommen werden, sowie ein Pulver mindestens eines Nichtmetalls, das aus der Kohlenstoff, Bor, Silizium enthaltenen Gruppe gewählt wurde, oder ein Pulver von Bor- und/oder Siliziumoxyd, verwendet und in der Wärmebehandlungszone einen Druck eines Gasmediums von etwa 1 bis etwa 100 atm erzeugt und die Wärmebehandlung des Rohlings durch die Entflammung einer Schicht des exothermen Gemisches mit anschließendem Reagieren der Komponenten desselben unter Bedingungen der Flammenführung bei einer Temperatur, die um etwa ein 1,6 bis 2,6faches die Schmelztemperatur der metallischen Grundmasse des Rohlings des Erzeugnisses übersteigt, bei einer solchen Wärmeabführung vornimmt, daß sich das Schmelzen lediglich der Decklage der metallischen Grundmasse des Rohlings vollzieht.

2.  Verfahren nach Anspruch 1, dadurch gekennzeichnet, daß man als exothermes Gemisch ein exothermes Gemisch verwendet, das Pulver eines Nichtmetalls, eines Reduktionsmittels, des Titan- Chrom-, Eisen- und/oder Nickel- und/oder Kobalktoxydes bei folgendem Verhältnis derselben, Masse-% enthält:

| | |
|---|---|
| Nichtmetall | 0,01 bis 7 |
| Reduktionsmittel | 22 bis 32 |
| Titanoxyd | 17 bis 4 |
| Chromoxyd | 25 bis 50 |
| Eisen- und/oder Nickel- und/oder Kobaltoxyd | Rest |

3.  Verfahren nach Anspruch 1, dadurch gekennzeichnet, daß das Verhältnis der Masse des exothermen Gemisches zu dem Flächeninhalt der metallischen Grundmasse auf welcher die verschleißfeste Oberfläche auszubilden ist, etwa (2 bis 40) zu etwa 1 g/cm² beträgt.

4.  Verfahren nach Anspruch 1, dadurch gekennzeichnet, daß das Verhältnis der Masse des exothermen Gemisches zu der Masse der metallischen Grundmasse etwa 0,1 bis etwa 5 beträgt.

5.  Verfahren nach Anspruch 1, dadurch gekennzeichnet, daß vor der Entflammung des exothermen Gemisches die metallische Grundmasse auf eine Temperatur von einem etwa 0,2 bis etwa 0,8fachen der Schmelztemperatur derselben erwärmt wird.

6.  Verfahren nach Anspruch 2, dadurch gekennzeichnet, daß das exotherme Gemisch Kohlenstoff in einer Menge von etwa 20 bis etwa 40 % von seiner stöchiometrischen Menge zusätzlich enthält und daß man als Gasmedium Luft verwendet.

7.  Verfahren nach Anspruch 1, dadurch gekennzeichnet, daß zwischen der metallischen Grundmasse und der Schicht des exothermen Gemisches ein Gemisch für die Ausbildung einer Zwischenlage untergebracht wird, die ein Pulver des Metalloxydes der metallischen Grundmasse mit einem Reduktionsmittel oder ein Pulver des Metalloxydes der exothermen Gemisches mit einem Reduktionsmittel, oder ein Pulver eines Metalls, das zur Zusammensetzung der metallischen Grundmasse gehört, und/oder ein Pulver eines Metalls, das zur Zusammensetzung des exothermischen Gemisches gehört, enthält.

8.  Verfahren nach Anspruch 7, dadurch gekennzeichnet, daß das Verhältnis der Masse des Gemisches für die Ausbildung einer Zwischenlage zu der Masse des exothermen Gemisches etwa 1 k (2,5 bis 25) beträgt.

9.  Verfahren nach Anspruch 1 dadurch gekennzeichnet, daß zur Herstellung der verschleißfesten Oberfläche an einem geringen Abschnitt der Oberfläche eines Erzeugnisses auf die Schicht des exothermen Gemisches ein Gemisch aus Molybdän- und Magnesiumoxyd zur Schaffung einer entflammbaren Schicht aufgebracht wird.

10.  Verfahren nach Anspruch 5, dadurch gekennzeichnet, daß zur Herstellung der verschleißfesten Oberfläche an einem geringen Abschnitt der Oberfläche eines Erzeugnisses auf die Schicht des exothermen Gemisches ein Gemisch aus Molybdän-und Magnesiumoxyd zur Schaffung einer entflammbaren Schicht aufgebracht wird.

11. Verfahren nach Anspruch 7, dadurch gekennzeichnet, daß zur Herstellung der verschleißfesten Oberfläche an einem geringen Abschnitt der Oberfläche eines Erzeugnisses zwischen der Schicht des exothermen Gemisches und der Zwischenschicht ein Gemisch aus Molybdän und Magnesium zur Schaffung einer entflammbaren Schicht angebracht wird.

12. Mehrlagenerzeugnis, hergestellt nach dem erfindungsgemäßen Verfahren.

# INTERNATIONAL SEARCH REPORT

International Application No PCT/SU 89/00073

---

**I. CLASSIFICATION OF SUBJECT MATTER** (if several classification symbols apply, indicate all) [6]

According to International Patent Classification (IPC) or to both National Classification and IPC

Int.Cl.$^5$ B 22 F 7/04

---

**II. FIELDS SEARCHED**

| Minimum Documentation Searched [7] | |
|---|---|
| Classification System | Classification Symbols |
| Int.Cl.$^5$ | B 22 F 7/04, 7/08, C 22 C 1/05 |

| Documentation Searched other than Minimum Documentation to the Extent that such Documents are Included in the Fields Searched [8] |
|---|
| |

---

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | Samorasprostranyajuschiisya vysokotemperaturny sîntez, sbornik annotatsy, No.1, 1969, Mezhotraslevoi nauchno-tekhnichesky komplex,"Termosintez", (Chernogolovka), see page 15, abstract No.27; page 21, abstract No.39 | 1,2,7 |
| A | G.V. Samsonov et al. "Magnietermia", 1971, Metallurgia, (Moscow), see page 116 | 9 |
| A | "Fizicheskaya khimia", sovremennye problemy, pod redaksiei ya. M. Kolotyrkina, 1983, Khimia, (Moscow), see pages 10,12,13 | 1,2,6 |

---

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

---

**IV. CERTIFICATION**

| Date of the Actual Completion of the International Search | Date of Mailing of this International Search Report |
|---|---|
| 24 October 1989 (24.10.89) | 6 December 1989 (06.12.89) |
| International Searching Authority | Signature of Authorized Officer |
| ISA/SU | |

Form PCT/ISA/210 (second sheet) (January 1985)